(19) Europäisches Patentamt
European Patent Office
Office européen des brevets

(11) Publication number : **0 565 238 A2**

(12) # EUROPEAN PATENT APPLICATION

(21) Application number : **93301802.0**

(22) Date of filing : **10.03.93**

(51) Int. Cl.$^5$ : **C08L 83/04,** C08L 83/05, C08K 5/14

(30) Priority : **09.04.92 US 865433**

(43) Date of publication of application : **13.10.93 Bulletin 93/41**

(84) Designated Contracting States : **DE FR GB**

(71) Applicant : **DOW CORNING CORPORATION
3901 S. Saginaw Road
Midland Michigan 48686-0994 (US)**

(72) Inventor : **Buch, Robert Raymond
1812 Brookfield
Midland, Michigan (US)**
Inventor : **Monroe, Carl Morrison
5207 Cortland Street
Midland, Michigan (US)**
Inventor : **Skostins, Olgerts
3319 Fernside
Midland, Michigan (US)**
Inventor : **Wolf, Byron Elmer
905 Helen Street
Midland, Michigan (US)**

(74) Representative : **Laredo, Jack Joseph et al
Elkington and Fife Prospect House 8
Pembroke Road
Sevenoaks, Kent TN13 1XR (GB)**

(54) **Silicone elastomer with improved fire performance.**

(57) A silicone elastomer which produces a lower amount of smoke when burned comprises polydiorganosiloxane, filler, platinum-containing material and silicon hydride, wherein the silicon hydride is a hydrogen on silicon-containing organosilicon polymer of the formula

$$(SiO_{4/2})_x(Me_2HSiO_{1/2})_y$$

where Me is methyl radical and the ratio of y/x is from 0.2/1 to about 4/1.

EP 0 565 238 A2

This invention is a method for making a silicone composition which produces a lower amount of smoke when burned, in which the composition comprises polydiorganosiloxane, filler, platinum-group metal containing material and silicon hydride; wherein the improvement comprises replacing all or part of the silicone hydride with an organo-silicon polymer containing $SiO_{4/2}$ units and $Me_2HSiO_{1/2}$ units, where Me is methyl radical. A preferred organosilicon polymer is a hydrogen on silicon-containing organosilicon polymer of the formula

$$(SiO_{4/2})_x(Me_2HSiO_{1/2})_y$$

where Me is methyl radical and the ratio of y/x is from 0.2/1 to about 4/1.

A method for making a silicone composition which produces a lower amount of smoke when burned, in which the composition comprises polydiorganosiloxane, filler, platinum-containing material and silicon hydride; comprises the use of from 1 to 10 parts by weight of a hydrogen on silicon-containing organosilicon polymer of the formula

$$(SiO_{4/2})_x(Me_2HSiO_{1/2})_y$$

where Me is methyl radical and the ratio of y/x is from 0.2/1 to about 4/1, per 100 parts by weight of polydiorganosiloxane, as the silicon hydride.

A preferred method for making a silicone composition which produces a lower amount of smoke when burned consists essentially of (A) mixing (1) 100 parts by weight of a vinyl containing polydiorganosiloxane, (2) from 10 to 50 parts by weight of reinforcing filler, (3) from 0 to 150 parts by weight of non-reinforcing filler, (4) from 1 to 10 parts by weight of a hydrogen on silicon-containing organosilicon polymer of the formula

$$(SiO_{4/2})_x(Me_2HSiO_{1/2})_y$$

where Me is methyl radical and the ratio of y/x is from 0.2/1 to about 4/1 and (5) sufficient platinum-containing material to give from 10 to 500 parts platinum per million parts of polydiorganosiloxane (1).

Silicone elastomers are well known for their resistance to high temperatures. This property has made their use popular in electrical wire and cable for use at elevated temperatures. They also have the property of retaining their insulating properties when burned, so have found use in applications where the electrical cable is required to operate at all times and under all conditions. Over the years additives have been found which improve the performance of such silicone elastomeric insulating materials. Included in the list of additives which improve resistance to burning are platinum-containing materials, metal oxides, such as zinc oxide, carbon black, ceric hydrate and gamma-type iron sesquioxide. Flame resistant compositions of polydiorganosiloxane, silicon hydride, filler and platinum-containing material, both with and without organic peroxide are also known. It has now been discovered that the type of silicon hydride used has an unexpected effect upon the amount of smoke generated when such compositions are burned.

The silicone elastomer bases into which the flame and smoke reducing additives of this invention are incorporated typically include a fluid polydiorganosiloxane in the well known liquid silicone rubber systems and high molecular weight gum-type polydiorganosiloxane in the well known high consistence silicone rubber systems. Both types of polymers are normally reinforced with a reinforcing silica filler. These compositions can also contain a low molecular weight silanol-functional liquid silane, organosiloxane or hydrolyzable precursor as a treating agent for the silica and, optionally, a finely divided quartz that can be present to reduce flame spread and smoke generation during combustion. The purpose of the treating agent is to prevent a phenomenon referred to by those skilled in the art as "creping" or "crepe hardening", which can result in a considerable increase in the viscosity of a curable elastomer composition during processing. Suitable anti-crepe hardening agents include low molecular weight hydroxyl terminated polydiorganosiloxanes and hexaorganodisilazanes, generally having less than 100 units per molecule.

The polydiorganosiloxane portion of the base exhibits a consistency ranging from a liquid to a non-flowing soluble gum that is characterized by a Williams plasticity value of from 0.040 to 0.1 inch as measured by the American Society of Testing and Materials (ASTM) test method No. D-926-67. The term "soluble" implies that the gum can be dissolved in benzene or toluene. The polydiorganosiloxane molecules consist essentially of substantially linear chains formed from one or more types of diorganosiloxane units. The organic groups bonded to the silicon atoms are typically monovalent hydrocarbon radicals or substituted monovalent hydrocarbon radicals. These hydrocarbon radicals can contain from 1 up to about 10 carbon atoms and include but are not limited to methyl, ethyl, propyl, vinyl, phenyl and 3,3,3-trifluoropropyl radicals. The ratio of these hydrocarbon radicals to silicon atoms is typically from 1.98 to 2.01.

At least one of the hydrocarbon radicals in each of the diorganosiloxane units is typically methyl and the other hydrocarbon radical is preferably methyl, phenyl, vinyl or 3,3,3-trifluoropropyl.

Examples of suitable polydiorganosiloxanes that can be used individually or in combination in the present curable elastomer compositions include polydimethylsiloxanes, polyphenylmethylsiloxanes and polymethyl-3,3,3-trifluoropropyl-siloxanes and copolymers of these units. When the polydiorganosiloxane contains vinyl or other ethylenically unsaturated hydrocarbon radicals, these constitute up to 2 percent and preferably less than 1 percent of the total number of silicon-bonded hydrocarbon radicals.

The terminal units of the polydiorganosiloxane molecules can be silanol or triorganosiloxy, where the organic substituents are members of the same group that are present on the repeating units. The terminal units may also contain vinyl radicals.

Polydiorganosiloxanes suitable for use in the present curable compositions are well known in the art and can be prepared by any suitable method that will yield hydroxyl or triorganosiloxy-terminated polymers. Many of these polydiorganosiloxanes are commercially available. It will be understood that while these materials are characterized as linear molecules they can contain trace concentrations of monoorganosiloxy and $SiO_{4/2}$ units that can result in chain branching.

In addition to the aforementioned polydiorganosiloxane, the curable silicone elastomer base also contain a reinforcing silica filler to improve the physical properties of the cured elastomer. Reinforcing silica fillers have a surface area of from about 50 to 400 $m^2$ per gram or higher. The silica is typically of the precipitated or fume type. The silica can be untreated prior to being combined with the other ingredients of the curable composition or it can be pretreated with one or more of the aforementioned anti-crepe hardening agents. Depending upon the physical properties desired in the cured elastomer the curable composition contains from 10 to 100 weight percent of reinforcing filler based on the weight of polydiorganosiloxane(s), preferably from 10 to 50 weight percent.

A variety of non-reinforcing fillers are used in flame retardant silicone elastomers to reduce smoke and flame spread rates. Particularly useful are hydrated alumina, magnesium compounds, ceric hydrate, carbon black, zinc oxide and mixtures of these compounds either alone or in combination with finely divided quartz to suppress both flame spread and smoke evolution. These fillers are normally used at a concentration of at least 40 parts by weight per 100 parts of silica-reinforced polyorganosiloxane gum.

The critical ingredient of this invention comprises the use of from 1 to 10 parts by weight of a hydrogen on silicon-containing organosilicon polymer of the formula

$$(SiO_{4/2})_x(Me_2HSiO_{1/2})_y$$

where Me is methyl radical and the ratio of y/x is from 0.2/1 to about 4/1, per 100 parts by weight of polydiorganosiloxane, per 100 parts by weight of the polydiorganosiloxane (1). This ingredient is a three-dimensional structure of monofunctional dimethylhydrogensiloxy units and tetrafunctional $SiO_{4/2}$ units. A preferred number of $Me_2HSiO_{1/2}$ units is from 6 to 10 and a preferred number of $SiO_{4/2}$ units is from 3 to 6. Further description of this ingredient and of its method of manufacture is found in U.S. Patent No. 4,707,531, issued November 17, 1987, which patent is incorporated by reference to describe this ingredient and its method of manufacture. Briefly, a mixture of 1,1,3,3-tetramethyldisiloxane, concentrated hydrochloric acid and water is cooled to 5°C. and tetramethoxysilane is slowly dripped in with stirring. The polymer layer is separated, water washed and stripped under heat and vacuum to remove low-boiling components.

The present compositions include any of the platinum-group metals and compounds of these metals known to impart flame retardancy to cured organosiloxane elastomers. These flame retardants can be present in any unsupported form that can be homogeneously dispersed into the curable composition. Suitable unsupported forms of platinum-group metals and compounds thereof include but are not limited to the readily dispersible compounds of platinum, rhodium and complexes of these compounds that are well known in the art. Illustrative of readily dispersible platinum-containing materials are finely divided platinum metal and compounds wherein platinum is bonded to one or more halogen atoms and, optionally, one or more hydrocarbon radicals and/or alkoxy groups.

Specific examples of suitable platinum compounds include but are not limited to chloroplatinic acid, platinum chlorides, platinum bromides and complexes of chloroplatinic acid with organic and organosilicon compounds containing ethylenically unsaturated hydrocarbon radicals. Complexes of chloroplatinic acid with vinyl-substituted organosiloxanes are particularly preferred platinum-based flame retardants for the present elastomer compositions.

The concentration of platinum group metal or compound thereof is equivalent to a platinum group metal content of at least 10 parts per million by weight of the aforementioned silicone elastomer base. Below this limit it may not be possible to reproducibly achieve the low levels of flame spread and smoke evolution that characterize the products of this invention. The platinum-group metal is preferably platinum. The amount of smoke suppression increases as the amount of platinum is increased up to a point. The upper useful limit is about 500 parts of platinum per million parts of polydiorganosiloxane in a typical formulation. The amount of fillers that are used in the composition also has an effect upon how much platinum is needed to obtain a given result in smoke suppression and flame spread.

When the polydiorganosiloxane used in the composition of this invention contains vinyl radicals, the combination of vinyl radical on silicone, hydrogen on silicon and platinum produces a well known hydrosilation system for curing silicone materials. The unsaturated vinyl radical reacts with the hydrogen on silicon in the presence of platinum to produce a crosslink. By the proper selection of the amount of vinyl radical on the siloxane

and the amount of hydrogen in the silicone hydride and the relative amounts used, a curing system can be produced. There are many examples of such systems present in the art.

The composition can also be cured through the use of an organic peroxide, a curing method for silicone also well known in the art. Preferred organic peroxides for this invention are the non-vinyl specific peroxides such as those derived from an aromatic carboxylic acid, such as benzoyl peroxide, p-chlorobenzoyl peroxide and 2,4-dichlorobenzoyl peroxide. The concentration of aromatic acid-based peroxide or peroxyester is typically from 0.1 to 10 parts by weight, preferably from 1 to 10 parts by weight, based on the weight of the polydiorganosiloxane(s).

The compositions of this invention are prepared by any suitable means that will produce a homogeneous mixture of the various ingredients. Methods of blending that are common in the silicone rubber art and suitable for this invention include mixing the ingredients in a dough-type mixer, Banbury mixer or on a rubber compounding mill; or in the case of the liquid polymers, any of the common stirring type mixers. The order in which the ingredients are added to the mixer is usually not critical. In a typical preparation the polydiorganosiloxane, reinforcing silica filler and any anti-crepe additives used to treat the filler are blended to homogeneity, after which the curing agent together with any extending filler are added and the mixing operation is continued at room temperature until a homogeneous composition is produced. Any additional additives such as flame retardants, pigments and heat stabilizers are added prior to the aromatic peroxide or peroxyester.

The polyorganosiloxane composition is normally cured by heating. This typically involves heating of the composition to temperatures of between 110 to 175°C., depending upon the decomposition temperature of the peroxide or peroxyester, where one is used. The heating period is a function of the thickness of the material to be cured and the method used to fabricate the material. In the case of curing through the hydrosilation reaction, this will take place at room temperature upon mixing unless a cure inhibitor, such as an unsaturated organic alcohol, is added, as is customary.

The compositions of this invention are particularly useful in the production of products like electrical insulation for electrical wire and cable where the absence of smoke and a slow flame spread rate are of great importance if the material is subjected to fire.

The following examples are included for illustrative purposes only and should not be construed as limiting the invention which is properly set forth in the appended claims.

The examples compare the results obtained by using different types of hydrogen on silicon-containing compounds in the different silicone rubber formulations. Compound A is a comparative example described as trimethylsiloxy endblocked polydiorganosiloxane having an average of five methylhydrogensiloxane units and three dimethylsiloxane units per molecule with a silicon-bonded hydrogen atom content in the range of about 0.7 to 0.8 weight percent. Compound B is a compound falling under this invention which is described as a resin having about 8 dimethylhydrogensiloxy units and 4 $SiO_{1/2}$ units with a hydrogen content of about 1 weight percent and a viscosity of about 0.024 Pa·s. Compound C is a comparative compound described as trimethylsiloxy-dimethylsiloxy-methylhydrogensiloxy-methylsiloxy copolymer having about 0.8 weight percent hydrogen and a viscosity of about 0.016 Pa·s.

## Example 1

A series of compositions were prepared to evaluate the effect of different types of organosilicon compounds having hydrogen on silicon in the molecule on the flame spread and smoke production when used in flame retardant silicone elastomer compositions.

A silicone base was prepared by mixing together 70 parts of a mixture consisting essentially of 82 weight percent of a dimethylvinylsiloxy endblocked polydimethylsiloxane having a viscosity of about 3 Pa·s at 25°C. and 18 weight percent of a benzene soluble resin copolymer of triorganosiloxy units and $SiO_2$ units in the mol ratio of about 0.7 mol of triorganosiloxy units per mol of $SiO_2$ units where the triorganosiloxy units are trimethylsiloxy units and dimethylvinylsiloxy units where the resin copolymer-contains from 1.4 to 2.2 weight percent silicon-bonded vinyl radicals, 30 parts of a mixture of 65 percent by weight of dimethylvinylsiloxy endblocked polydimethylsiloxane having a viscosity of about 2.1 Pa·s at 25°C. and 35 percent by weight of a benzene soluble resin copolymer of triorganosiloxy units and $SiO_2$ units in the mol ratio of about 0.7 mol of triorganosiloxy unit per mol of $SiO_2$ unit where the triorganosiloxy units are trimethylsiloxy units and dimethylvinylsiloxy units and the resin copolymer has from 1.4 to 2.2 weight percent silicon-bonded vinyl radicals, 5.3 parts of hexamethyldisilazane and 0.5 part of water, 1.7 parts of hydroxyl endblocked polydiorganosiloxane having methyl and vinyl radicals and having about 10 weight percent vinyl radical and about 16 weight percent hydroxyl radical, 21.6 parts of silica having a surface area of about 250 $m^2/g$, 99 parts of 5 micron ground quartz and 5 parts of ceric hydrate.

The above base was then mixed with the hydrogen containing compounds described above in the amounts

shown in Table I, along with 0.24 part of chloroplatinic acid complex of divinyltetramethyldisiloxane diluted with dimethylvinylsiloxy endblocked polydimethylsiloxane to provide 0.7 weight percent platinum (16.7 parts platinum per million parts polydimethylsiloxane) and the amount of methyl butynol cure inhibitor shown in Table I to give a curable stock.

The silicone stock was molded into 1/4 inch thick slabs for testing by compression molding for 20 minutes at 150°C. Physical properties were measured on test samples cut from slabs of 0.075 inch thickness molded for 10 minutes at 150°C.

The physical properties were measured in accordance with standard ASTM procedures, ASTM D 2240 for durometer and ASTM D 412 for tensile strength and elongation. Smoke and flame spread were measured in accordance with ASTM E 1354-90 in a cone calorimeter, with variation due to the fact that the samples are of silicone elastomer. The calorimeter consists of a combustion chamber in which the sample is ignited while exposed to predetermined heat flux generated by an electrically powered conical incandescent heater positioned 2.5 cm. above the sample. The sample is mounted on a load cell which allows the weight of the sample to be monitored during the combustion process.

Prior to insertion of the test sample into the combustion chamber the conical heater is energized to produce a heat flux of 60 kilowatts per square meter at the sample surface. When equilibrium conditions are established within the combustion chamber the test sample is covered with a metal heat shield to prevent premature ignition and positioned in the combustion chamber. Combustion of the sample is initiated by removing the heat shield and igniting the vapors generated by the heated sample by means of an electric arc located 1.3 cm. above the surface of the sample. The electric arc is actuated between 2.5 and 3.5 seconds following removal of the heat shield. The time interval between removal of the heat shield and the observation of constant combustion on the sample is measured and is referred to as the time to ignition ($t_{ig}$)

The smoke generated during combustion of the sample is drawn into the exhaust duct of the calorimeter by means of a heat-resistant blower located within the duct. The speed of the blower is controlled to produce a flow rate of about 100 cubic feet of gases per minute through the duct.

The optical density of the smoke evolved during the combustion process is determined by directing the beam from a helium-neon laser across the exhaust duct and measuring the intensity of the light emerging from the smoke stream by means of two silicon photodiodes, one of which is positioned to measure the intensity of the light passing through the smoke stream and the second serving as a reference. The specific extinction value, $k_{sp}$, expressed in units of square meters per kilogram, is then calculated:

$$k_{sp} = \frac{k\dot{V}}{\dot{M}''_B}$$

where $\dot{V}$ represents the volumetric flow rate in the exhaust duct, expressed in cubic meters/second; k is the extinction coefficient and is equal to 1/L 1n($I_0$/I), where L represents the length of the light path across the flue passage, $I_0$ is the initial intensity of the laser beam, I is the intensity of the beam emerging from the smoke stream, 1n represents the natural logarithm; and

$\dot{M}''_B$ is the mass burning rate, expressed in kg/second/$m^2$.

The extinction coefficient of the smoke generated by the burning sample was measured during the entire combustion period. The extinction coefficients were converted to specific extinction values using the foregoing formula. The specific extinction values obtained during combustion of a given sample are reported in the following examples. A lower value corresponds to a reduced level of smoke generation.

The rate of flame spread for the compositions was calculated from the external heat flux ($Q_{ext}$), in units of kilowatts/$m^2$ generated by the conical heater, which is determined using a calibrated Gardon gauge and the time interval ($t_{ig}$) between initial exposure of the sample to the unshielded heat flux emanating from the cone heater and ignition of the sample by vapors previously ignited by firing of the electric arc. By expressing the kilowatts portion of the heat flux units as the equivalent in kilojoules per second and multiplying this by $t_{ig}$ the seconds units cancel one another and the result is defined as ignition energy ($E_{ig}$) and is expressed in units of kilojoules/$m^2$. $E_{ig}$ is a measure of the amount of heat required to produce a concentration of flammable vapors over an area of one square meter to result in flame propagation. The reciprocal of the $E_{ig}$ value determined using a heat flux of 60 kilowatts/$m^2$ is useful as a measure of the rate of flame spread for the sample. This value multiplied by $10^4$ appears as the flame spread rating (FSR) in the accompanying tables. A lower number indicates a reduced tendancy for flame to spread.

Table I

| Sample | 1* | 2 |
|---|---|---|
| Cmpd A, parts | 5.6 | -.- |
| Cmpd B, parts | -.- | 4.5 |
| Inhibitor, parts | 0.06 | 0.6 |
| Durometer, Shore A | 79 | 84 |
| Tensile, psi | 853 | 986 |
| Elongation, percent | 125 | 57 |
| Smoke $m^2$/kg | 400 | 200 |
| Flame Spread | 2.4 | 2.5 |

* comparative sample

Example 2

Another series of compositions was prepared to evaluate the effect of different types of organosilicon compounds having hydrogen on silicone, but using a different silicone base.

A silicone base was prepared by mixing together 35 parts of dimethylvinylsiloxy endblocked polydimethylsiloxane having a viscosity of about 55 Pa·s at 25°C., 50 parts of dimethylvinylsilyl endblocked polydimethylsiloxane fluid having a viscosity of about 2.1 Pa·s at 25°C., 15 parts of dimethylvinylsiloxy endblocked polydimethylsiloxane having a viscosity of about 0.45 Pa·s at 25°C., 16 parts of hexamethyldisilazane and 2 parts of water, 0.5 part of hydroxyl endblocked polydiorganosiloxane having methyl and vinyl radicals and having about 10 weight percent vinyl radical and about 16 weight percent hydroxyl radical, 30 parts of the silica of example 1, 120 parts of 5 micron ground quartz, 10 parts of aluminum trihydrate and 5 parts of magnesium hydroxide.

The above base was then mixed with the amount of hydrogen containing material shown in Table II, along with 1.7 parts of the platinum containing compound of example 1 (119 parts platinum per million parts polydimethylsiloxane), the amount of cure inhibitor shown in Table II and 4.2 parts of catalyst paste of 50 percent 2,4-dichlorobenzoyl peroxide in polydiorganosiloxane fluid to give a curable stock.

The silicone stock was molded into 1/4 inch thick slabs for testing by compression molding for 20 minutes at 150°C. Physical properties were measured on test samples cut from slabs of 0.075 inch thickness molded for 10 minutes at 150°C. The properties of these samples were measured as in Example 1 with the results shown in Table II.

Table II

| Sample | 3* | 4* | 5 |
|---|---|---|---|
| Cmpd A, parts | -.- | 2.7 | -.- |
| Cmpd B, parts | -.- | -.- | 2.7 |
| Cmpd C, parts | 2.7 | -.- | -.- |
| Inhibitor, parts | 0.4 | 0.25 | 0.4 |
| Durometer, Shore A | 73 | 77 | 76 |
| Tensile, psi | 798 | 860 | 827 |
| Elongation, percent | 100 | 97 | 79 |
| Smoke $m^2$/kg | 500 | 500 | 200 |
| Flame Spread | 2.4 | 2.4 | 2.5 |

* comparative sample

## Claims

1. In a silicone elastomer composition comprising polydiorganosiloxane, filler, platinum-group metal containing material and silicon hydride; the improvement comprising replacing all or part of the silicon hydride with an organosilicon polymer containing $SiO_{4/2}$ units and $Me_2HSiO_{1/2}$ units, where Me is methyl radical.

2. The silicone elastomer composition of claim 1 in which the amount of organosilicon polymer is sufficient to reduce the amount of smoke generated upon burning the composition, in comparison to burning a like composition without the organosilicon polymer.

3. A silicone elastomer composition comprising
(1) 100 parts by weight of polydiorganosiloxane,
(2) from 10 to 100 parts by weight of reinforcing filler,
(3) from 0 to 150 parts by weight of non-reinforcing filler,
(4) an amount of organosilicon polymer containing $SiO_{4/2}$ units and $Me_2HSiO_{1/2}$ units, where Me is methyl radical, sufficient to reduce the amount of smoke generated upon burning the composition, in comparison to burning a like composition without the organosilicon polymer,
(5) sufficient platinum-containing material to give from 10 to 500 parts platinum per million parts polydiorganosiloxane (1).

4. The silicone composition of claim 3 in which there is also present from 1 to 10 parts by weight of organic peroxide.

5. The silicone composition of claim 1 in which there is also present organic peroxide to aid in curing the composition.

6. A method for making a silicone composition which produces a lower amount of smoke when burned, in which the composition comprises polydiorganosiloxane, filler, platinum-containing material and silicon hydride; said method comprising incorporating from 1 to 10 parts by weight of a hydrogen on silicon-containing organosilicon polymer of the formula

$$(SiO_{4/2})_x(Me_2HSiO_{1/2})_y$$

where Me is methyl radical and the ratio of y/x is from 0.2/1 to about 4/1, per 100 parts by weight of polydiorganosiloxane, as the silicon hydride.

7. The method of claim 6 in which there is also present from 1 to 10 parts by weight of organic peroxide.

8. The method of claim 7 in which the composition is molded and cured to give a silicone elastomer.